# EUROPÄISCHE PATENTSCHRIFT

(11) **EP 2 449 664 B1**
(45) Veröffentlichungstag und Bekanntmachung des Hinweises auf die Patenterteilung: **26.08.2015**
(21) Anmeldenummer: 10725772.7
(22) Anmeldetag: 22.06.2010
(51) Int. Cl.: H02M 3/335, H02M 7/48

(54) **DC/DC-WANDLER MIT HILFSWANDLER ZUR ERDSTROMKOMPENSATION**
DC/DC CONVERTER COMPRISING AUXILIARY CONVERTER FOR GROUND CURRENT COMPENSATION
CONVERTISSEUR CONTINU-CONTINU AVEC CONVERTISSEUR AUXILIAIRE DESTINÉ À COMPENSER LE COURANT DE FUITE

(30) Priorität: 02.07.2009 EP 09164447
(43) Veröffentlichungstag der Anmeldung: 09.05.2012
(73) Patentinhaber: SMA Solar Technology AG, 34266 Niestetal (DE)
(72) Erfinder: RIGBERS, Klaus, 34121 Kassel (DE)
(86) Internationale Anmeldenummer: PCT/EP2010/058817
(87) Internationale Veröffentlichungsnummer: WO 2011/000741

(56) Entgegenhaltungen:
- EP-A1- 0 696 841
- EP-A1- 2 023 475
- EP-A2- 0 398 722
- WO-A1-01/80411
- CA-A1- 2 431 689
- DE-A1- 2 508 314
- US-A1- 2007 091 648
- JACOB J ET AL: "A novel three-phase DC/DC converter for high-power applications" POWER ELECTRONICS SPECIALISTS CONFERENCE, 2004. PESC 04. 2004 IEEE 35T H ANNUAL AACHEN, GERMANY 20-25 JUNE 2004, PISCATAWAY, NJ, USA,IEEE, US, Bd. 3, 20. Juni 2004 (2004-06-20), Seiten 1861-1867, XP010739464 ISBN: 978-0-7803-8399-9
- ALEXANDER L JULIAN ET AL: "Elimination of Common-Mode Voltage in Three-Phase Sinusoidal Power Converters" IEEE TRANSACTIONS ON POWER ELECTRONICS, IEEE SERVICE CENTER, PISCATAWAY, NJ, US, Bd. 14, Nr. 5, 1. September 1999 (1999-09-01), XP011043341 ISSN: 0885-8993
- SATOSHI OGASAWARA ET AL: "An Active Circuit for Cancellation of Common-Mode Voltage Generated by a PWM Inverter" IEEE TRANSACTIONS ON POWER ELECTRONICS, IEEE SERVICE CENTER, PISCATAWAY, NJ, US, Bd. 13, Nr. 5, 1. September 1998 (1998-09-01), XP011043218 ISSN: 0885-8993

## Beschreibung

### QUERVERWEIS AUF VERWANDTE ANMELDUNGEN

Die Erfindung nimmt die Priorität der parallel anhängigen europäischen Patentanmeldung Nummer 09 164 447.6 in Anspruch, die am 2. Juli 2009 eingereicht wurde und den Titel "DC/DC-Wandler mit Hilfswandler zur Erdstromkompensation" trägt.

### TECHNISCHES GEBIET DER ERFINDUNG

Die Erfindung betrifft einen DC/DC-Wandler zum Umwandeln einer zwischen zwei Eingangsleitungen auf einer Eingangsseite des DC/DC-Wandlers anliegenden Eingangsgleichspannung in eine zwischen zwei Ausgangsleitungen auf einer Ausgangsseite des DC/DC-Wandlers anliegende Ausgangsgleichspannung.

Indem die Eingangsleitungen und die Ausgangsleitungen bei einem DC/DC-Wandler mit den Merkmalen des Oberbegriffs des unabhängigen Patentanspruchs 1 auf kapazitive Weise galvanisch voneinander getrennt sind, befasst sich die Erfindung speziell mit solchen DC/DC-Wandler, die auch ohne zwischengeschalteten Transformator eine galvanische Trennung ihrer Ausgangsleitungen von ihren Eingangsleitungen bereitstellen, d. h. mit transformatorlosen DC/DC-Wandler.

Insbesondere kann ein DC/DC-Wandler, auf den sich die vorliegende Erfindung bezieht, Teil einer Gleichspannungs-Eingangsstufe eines Wechselrichters zur Einspeisung elektrischer Energie von einer Gleichstromquelle in ein Wechselstromnetz sein. Insoweit bezieht sich die vorliegende Erfindung auch auf transformatorlose Wechselrichter mit galvanischer Trennung.

Bei der Gleichstromquelle, von der die elektrische Energie kommt, kann es sich insbesondere um eine Photovoltaikanlage, beispielsweise in Form eines einzelnen oder mehrerer zu einem oder mehreren Strings zusammengefassten Photovoltaikmodule handeln. Die Gleichstromquelle kann aber beispielsweise auch ein Kondensator sehr großer Kapazität, ein sogenannter Supercap, ein Gleichspannungsgenerator oder ein Brennstoffzellenstack sein. Das Wechselstromnetz, in das elektrische Energie von der Gleichstromquelle eingespeist wird, kann ein einphasiges oder mehrphasiges, insbesondere dreiphasiges Wechselstromnetz sein. Es kann sich bei dem Wechselstromnetz sowohl um ein öffentliches Stromnetz als auch ein Inselstromnetz als auch jede darüber hinaus denkbare Variante eines Stromnetzes handeln.

Der erfindungsgemäße DC/DC-Wandler ist auch außerhalb der Einspeisung von elektrischer Energie in Wechselstromnetze vielfältig einsetzbar. Auch bei Verwendung bei der Einspeisung von elektrischer Energie in Wechselstromnetze kann er mit vor- und/oder nachgeschalteten, insbesondere hoch- oder tiefsetzstellenden Schaltungen, z. B. in Form eines oder mehrerer weiterer DC/DC-Wandler, kombiniert werden. Ziel kann dabei insbesondere eine erhöhte Bandbreite der Veränderbarkeit des Übersetzungsverhältnisses der Gesamtschaltung sein.

### DEFINITIONEN

Soweit im Folgenden die Angabe "verbindbar" insbesondere in der Form "elektrisch leitend verbindbar" verwendet wird, so verweist diese Angabe nicht auf die triviale Möglichkeit, die im Zusammenhang mit der Angabe bezeichneten Bestandteile des DC/DC-Wandlers auf irgendeine Weise (elektrisch leitend) miteinander zu verbinden. Vielmehr ist mit der Angabe gemeint, dass bei dem DC/DC-Wandler die jeweilige Verbindung bereits angelegt ist und nur noch - beispielsweise durch Schließen eines Schalters oder das elektrisch leitend Werden einer Diode - umgesetzt zu werden braucht, auch wenn dies im Einzelfall nicht explizit zur näheren Erläuterung der "Verbindbarkeit" ausgeführt ist.

Soweit im Folgenden die Angabe "elektrisch leitend" insbesondere in der Form "elektrisch leitende Verbindung" gemacht wird, so bedeutet dies, dass die im Zusammenhang mit der Angabe bezeichneten Bestandteile des DC/DC-Wandlers dauerhaft in einer solchen Weise verbunden sind, dass Wechselstrom zwischen Ihnen fließen kann. Die Verbindung kann dabei galvanisch oder auch kapazitiv ausgebildet sein.

Soweit im Folgenden die Angabe "schaltend" insbesondere in der Form "schaltende Verbindung" gemacht wird, so verweist diese Angabe nicht notwendigerweise darauf, dass diese Verbindung aktiv geschaltet wird. Für aktiv geschaltete Verbindungen bzw. Schalter werden die Bezeichnungen "getaktet" oder "angesteuert" verwendet. Eine schaltende Verbindung kann auch passiv schalten und beispielsweise durch eine Diode bereitgestellt werden.

Soweit im Folgenden die Angabe "Zwischenpotentialeingangs- oder -ausgangsleitung, die ein zwischen den Eingangs- bzw. Ausgangsleitungen liegendes Zwischenpotential führt" verwendet wird, so bedeutet dies, dass diese Zwischenpotentialleitung im obigen Sinne elektrisch leitend mit den beiden Eingangs- bzw. Ausgangsleitungen verbunden ist und so bezüglich ihres elektrischen Potentials zwischen diesen liegt.

Soweit im Folgenden die Bezeichnungen "Kapazität" und "Induktivität" für Bestandteile des DC/DC-Wandlers verwendet werden, so bedeuten diese "ein oder mehrere beliebig verschaltete Kondensatoren, die eine elektrische Kapazität bereitstellen" bzw. "ein oder mehrere beliebig verschaltete Spulen oder Drosseln, die eine elektrische Induktivität bereitstellen".

### STAND DER TECHNIK

Ein Wechselrichter zur Einspeisung elektrischer Energie von einer Gleichstromquelle in ein Wechselstromnetz mit einem die Merkmale des Oberbegriffs des unabhängigen Patentanspruchs 1 aufweisenden DC/DC-Wandler ist aus der EP 2 023 475 A1 bekannt. Hier liefert der DC/DC-Wandler wenigstens zwei bipolare Ausgangsgleichspannungen, die zwischen den Eingangsleitungen des Wechselrichters relativ zu einem geerdeten Mittelpunkt additiv überlagert werden. Konkret ist jeder Resonanzkreis verzweigt und weist zwei Teilresonanzkapazitäten auf, die ausgangsseitig jeweils an zwei Gleichrichterdioden angeschlossen sind und über diese wechselweise elektrisch leitend mit den Leitungen eines Teils eines geteilten Zwischenkreises verbunden werden, an den die Wechselrichterbrücke der Wechselrichters angeschlossen ist. Auf diese Weise weist der bekannte Wechselrichter ein Grundübersetzung für die zwischen den Eingangsleitungen des Wechselrichters anliegende Gleichspannung in eine an den Eingangsleitungen der Wechselrichterbrücke anliegende Zwischenkreisgleichspannung von 1 : n auf, wobei n die Anzahl der Teilresonanzkapazitäten ist, zu denen die Resonanzkreise insgesamt verzweigt sind. Anders gesagt entspricht n der Anzahl der Teile des geteilten Zwischenkreises, aus dem die Wechselrichterbrücke gespeist wird. Diese Grundübersetzung der Eingangsgleichspannung kann sich als ungünstig erweisen, wenn der bekannte Wechselrichter zur Einspeisung von elektrischer Energie von einem Photovoltaikmodul in ein Wechselstromnetz verwendet werden soll, wenn die von dem Photovoltaikmodul bereitgestellte Gleichspannung bereits größer oder zumindest annähernd so groß ist wie die Scheitelspannung des Wechselstromnetzes. Heute übliche Photovoltaikpaneele stellen zum Teil so hohe Gleichspannungen bereit, dass die Scheitelspannung eines zu speisenden Wechselstromnetzes um ein Mehrfaches überschritten wird.

Bei dem aus der EP 2 023 475 A1 bekannten DC/DC-Wandler weisen nicht alle Ausführungsformen eine galvanische Trennung zwischen den Eingangsleitungen des Wechselrichters, die zugleich die Eingangsleitungen des DC/DC-Wandlers sind, und den Eingangsleitungen der Wechselrichterbrücke, die zugleich die Ausgangsleitungen des DC/DC-Wandlers sind, auf. Bei einigen Ausführungsformen ist vielmehr eine über den Zwischenkreis hinweg gehende Erdung des Mittelpunktes des geteilten Zwischenkreises und einer der Eingangsleitungen des DC/DC-Wandler vorgesehen. In dem Oberbegriff des unabhängigen Patentanspruchs 1 entsprechenden Ausführungsformen des bekannten DC/DC-Wandler ist der Mittelpunkt des geteilten Zwischenkreises, der über Kapazitäten an die Eingangleitungen der Wechselrichterbrücke angeschlossen ist, an einen Mittelpunkt zwischen den Eingangsleitungen des Wechselrichters angeschlossen, der ebenfalls über Kapazitäten an diese Eingangleitungen angeschlossen ist. Über diesen Anschluss wird ein passiver Wechselstromrückflusspfad bereitgestellt, der aufgrund seines rein kapazitiven Anschlusses an die Eingangsleitungen des Wechselrichters die galvanische Trennung zwischen den Eingangsleitungen des Wechselrichters und den Eingangsleitungen der Wechselrichterbrücke nicht beseitigt.

Bei den Ausführungsformen des aus der EP 2 023 475 A1 bekannten Wechselrichters, bei denen die Eingangsleitungen des Wechselrichters von den Eingangsleitungen der Wechselrichterbrücke galvanisch getrennt sind, kann für die Eingangsgleichspannung ein freies Bezugspotential gewählt werden. Dabei besteht aber die Gefahr, dass sich die Stromsumme der über den Resonanzkreis und den passiven Wechselstromrückflusspfad fließenden Ströme nicht zu null ausgleicht und so in unerwünschter Weise auch größere Ausgleichsströme über Erde fließen.

So treten Gleichtaktströme über einen DC/DC-Wandler zwangsläufig auf, wenn bei einem DC/DC-Wandler, dessen Ausgangsseite kapazitiv von dessen Eingangsseite entkoppelt ist, die Eingangsseite durch Erdung einer der Eingangsleitungen einen festen Erdbezug hat, während sich der Erdbezug der Ausgangsseite aufgrund eines angeschlossenen, in ein Wechselstromnetz mit Erdbezug einspeisenden Wechselrichters periodisch ändert.

Aus der EP 0 696 841 A1 ist eine Variante eines sogenannten Sihgle-Ended Primary Inductance Converter (SEPIC) mit galvanischer Trennung durch eine zusätzliche Kapazität im Wechselstromrückflusspfad bekannt, die einen weiteren DC/DC-Wandlers mit den Merkmalen des Oberbegriffs des unabhängigen Patentanspruchs 1 darstellt. Auch hier besteht die Gefahr, dass sich die Stromsumme der über den Wechselstromvorwärtsflusspfad und den passiven Wechselstromrückflusspfad fließenden Ströme nicht zu null ausgleicht und so in unerwünschter Weise größere Ausgleichsströme über Erde fließen müssen.

Ein gattungsgemäßer DC/DC-Wandler ist aus der offenbarung mit dem Titel "A Novel Three-Phase DC/DC Converter for High-Power Applications" von Joep Jacobs et al. -PESC 2004 bekannt.

### AUFGABE DER ERFINDUNG

Es besteht weiterhin ein Bedürfnis nach einem DC/DC-Wandler, bei dem Ausgleichsströme über Erde grundsätzlich vermieden werden können.

### LÖSUNG

Die Erfindung stellt einen DC/DC-Wandler zum Umwandeln einer zwischen zwei Eingangsleitungen auf einer Eingangsseite des DC/DC-Wandlers anliegenden Eingangsgleichspannung in eine zwischen zwei Ausgangsleitungen auf einer Äusgangsseite des DC/DC-Wandlers anliegende Ausgangsgleichspannung bereit, wobei der DC/DC-Wandler aufweist:
- mindestens einen Wechselstromvorwärtspfad, der über elektrische Bauteile eingangsseitig mit den Eingangsleitungen und ausgangsseitig mit den Ausgangsleitungen verschaltet ist, wobei die elektrischen Bauteile zwischen dem Wechselstromvorwärtspfad und mindestens einer der Eingangsleitungen und mindestens einer der Ausgangsleitungen schaltende elektrische Bauteile sind, von denen mindestens eines aktiv angesteuert ist;
- mindestens einen Wechselstromrückflusspfad für einen Rückfluss von über den Wechselstromvorwärtspfad abfließendem Strom, der über Verbindungen eingangsseitig mit mindestens einer der Eingangsleitungen und ausgangsseitig mit mindestens einer der Ausgangsleitungen verbunden ist, wobei die eingangsseitigen und ausgangsseitigen Verbindungen gleiche Verbindungen aus der Gruppe sind, die direkte galvanische Verbindungen, kapazitive Verbindungen und schaltende Verbindungen umfasst;
- wobei die Eingangsleitungen durch Kapazitäten in allen Wechselstrompfaden galvanisch von den Ausgangsleitungen getrennt sind; und
- einen Hilfswandler zum Kompensieren einer Stromsumme über alle Wechselstromvorwärtspfade und Wechselstromrückflusspfade, der einen zusätzlichen, parallel zu allen Wechselstromvorwärtspfaden und Wechselstromrückflusspfaden verlaufenden Kompensationsstrompfad an dessen einem Ende über zwei angesteuerte Schalter wechselweise mit zwei Leitungen auf derselben Seite des DC/DC-Wandlers, die aus der Gruppe von Leitungen ausgewählt sind, welche die Eingangsleitungen, zwischen den Eingangsleitungen liegende Zwischenpotentiale führende Zwischenpotentialeingangsleitungen, die Ausgangsleitungen und zwischen den Ausgangsleitungen liegende Zwischenpotentiale führende Zwischenpotentialausgangsleitungen umfasst, elektrisch leitend verbindet, wobei der Kompensationsstrompfad an seinem anderen Ende über mindestens eine Verbindungskapazität mit mindestens einer Leitung auf der derselben Seite des DC/DC-Wandlers gegenüberliegenden Seite, die aus der genannten Gruppe von Leitungen ausgewählt ist, dauerhaft elektrisch leitend verbunden ist.

### KURZBESCHREIBUNG DER FIGUREN

Die Erfindung wird Im Folgenden anhand verschiedener Ausführungsbeispiele des neuen DC/DC-Wandlers näher erläutert und beschrieben.
- **Fig.** 1: skizziert einen transformatorlosen Wechselrichter mit einer ersten Ausführungsform des neuen DC/DC-Wandlers;
- **Fig. 2**: skizziert einen transformatorlosen Wechselrichter, der gegenüber Fig. 1 durch eine zweite Ausführungsform des neuen DC/DC-Wandlers abgewandelt ist.
- **Fig. 3**: skizziert einen weiteren transformatorlosen Wechselrichter mit einer Ausführungsform des neuen DC/DC-Wandlers als SEPIC.
- **Fig. 4**: skizziert eine alternative Ausführungsform des Kompensationsstrompfads des Wechselrichters gemäß Fig. 1; und
- **Fig. 5**: skizziert noch eine weitere alternative Ausführungsform des Kompensationsstrompfads des Wechselrichters gemäß Fig. 1.

### DETAILLIERTE BESCHREIBUNG DER ERFINDUNG

Um das Problem der Erdströme bei dem neuen DC/DC-Wandler zu beseitigen, wird ein über alle Wechselstromvorwärtsflusspfade und Wechselstromrückflusspfade abfließender Strom, das hießt die nicht ausgeglichene Stromsumme, die sonst über Erde ausgeglichen werden müsste, mit einem Hilfswandler kompensiert, der einen Kompensationsstrompfad, welcher parallel zu allen Wechselstromvorwärtsflusspfaden und allen Wechselstromrückflusspfaden verläuft, über zwei getaktete Schalter wechselweise mit je einer der Eingangsleitungen des DC/DC-Wandlers oder wechselweise mit je einer der beiden Ausgangsleitungen des DC/DC-Wandlers elektrisch leitend verbindet. Der Hilfswandler weist entsprechend eine Schaltbrücke zwischen den Eingangsleitungen oder den Ausgangsleitungen des DC/DC-Wandlers auf.

Auf seiner den getakteten Schaltern gegenüberliegenden Seite ist der Kompensationsstrompfad über mindestens eine Verbindungskapazität mit mindestens einer der Ausgangsleitungen oder einer ein dazwischen liegendes Potential führenden Zwischenpotentialleitung bzw. einer der Eingangsleitungen oder einer ein dazwischen liegendes Potential führenden Zwischenpotentialleitung verbunden. Das Potential einer solchen Zwischenpotentialleitung wird gegenüber den Potentialen der Ausgangs- bzw. Eingangsleitungen definiert. Wenn hierfür zwei Kondensatoren verwendet werden, bilden diese die Verbindungskapazitäten aus, über die der Kompensationsstrompfad mit den Ausgangs- bzw. Eingangsleitungen verbunden ist.

Auf seiner den getakteten Schaltern gegenüberliegenden Seite ist der Kompensationsstrompfad ohne Zwischenschaltung schaltender elektrischer Bauteile mit der Leitung oder den ausgangs- oder eingangsseitigen Leitungen auf dieser Seite des DC/DC-Wandlers verbunden ist. Er unterscheidet sich so von jedem Wechselstromvorwärtspfad, der an seinen beiden Enden mindestens ein schaltendes elektrisches Bauteil aufweist, und auch von jedem Wechselstromrückflusspfad, der an seinen beiden Enden in gleicher Weise mit den Eingangs- und Ausgangsleitungen verbunden ist, d. h. entweder dauerhaft elektrisch leitend oder über schaltende elektrische Bauteile.

Der Hilfswandler ist nur für einen Teil des insgesamt über den DC/DC-Wandler fließenden Stroms ausgelegt. Typischerweise überträgt er nicht mehr als 10 %, meistens nicht mehr als 5 % und oft noch deutlich weniger des aktuell über alle Wechselstromvorwärtspfade abfließenden Stroms. Der wesentliche Rückfluss dieses Stroms erfolgt über den oder die Wechselstromrückflusspfade. Nur der Anteil des Stroms, der nicht von selbst zurückfließt, muss mit dem Hilfswandler aktiv zurückgeführt werden, um Ausgleichsströme über Erde zu vermeiden. Im zeitlichen Mittel ist der über Kompensationsstrompfad fließende Strom ebenso wie die damit übertragene elektrische Energie zudem null. Der konstruktive Aufwand für den Hilfswandler einschließlich des Kompensationsstrompfads hält sich daher in Grenzen.

Die Ansteuerung des Hilfswandlers kann in einfacher Weise so erfolgen, dass die insgesamt über alle Wechselstromvorwärtsflusspfade und Wechselstromrückflusspfade fließende Stromsumme gegen null kompensiert wird, was angesichts der Tatsache, dass die über diese Strompfade und den Kompensationsstrompfad fließenden Ströme hochfrequent sind, leicht beispielsweise mit einer Induktionsspule überwacht werden kann, in der ein Strom induziert wird, wenn in einem alle Strompfade umschließenden Ringkern als Stromsummenwandler ein magnetisches Wechselfeld induziert wird. Die Erfassung der gegen null zu regelnden Stromsumme kann außer über den Wechselstromvorwärtsflusspfaden, den Wechselstromrückflusspfaden und dem Kompensationsstrompfad auch über den Eingangs- oder Ausgangsleitungen des DC/DC/-Wandlers und über jeder anderen den Gesamtstrom führenden Gruppe von Leitern erfolgen. Die Stromsumme bzw. der davon abgebildete zu unterdrückende Ausgleichsstrom über Erde kann vielfach auch aus Betriebsdaten beispielsweise eines dem DC-DC-Wandler nachgeschalteten Wechselrichter modelliert werden, so dass eine Messung der aktuellen Stromsumme bzw. des aktuellen Ausgleichsstroms für deren bzw. dessen Kompensation nicht einmal erforderlich ist.

Konkret kann die Steuerung des Hilfswandlers die getakteten Schalter nach dem Prinzip der Pulsweitenmodulation ansteuern, d. h. mit einer festen Frequenz für unterschiedliche Zeiträume schließen. Der Algorithmus, nach dem die Steuerung die Stromsumme gegen null kompensiert, kann durch einen Regler definiert werden, der zumindest ein Proportionalglied aufweist. Zusätzlich kann der Regler resonant sein, und er kann ein zusätzliches Integral- und/oder Differentialglied aufweisen. Umgesetzt sein kann der Regler digital in Form eines Mikrocontrollers, Mikroprozessors, programmierbaren Bausteins und/oder eines sogenannten ASIC. Es ist aber auch möglich, den Regler analog unter Verwendung von Operationsverstärkern aufzubauen.

In dem Kompensationsstrompfad kann neben der Verbindungskapazität auch eine Induktivität vorgesehen sein, um die passiven Eigenschaften des Kompensationspfads abzustimmen. Eine derartige Induktivität liegt vorzugsweise auf der Seite der Verbindungskapazität, die den Schaltern des Hilfswandlers zugewandt ist.

Zusätzlich kann der Kompensationsstrompfad zur Abstimmung seiner passiven Eigenschaften auf der Seite mit den getakteten Schaltern über eine Kopplungskapazität mit einer der Eingangsleitungen bzw. einer der Ausgangsleitungen des DC/DC-Wandlers verbunden sein. Die Kopplungskapazität wird zwischen der Induktivität und der Verbindungskapazität an den Kompensationsstrompfad angeschlossen.

Auf der den getakteten Schaltern gegenüberliegenden Seite ist der Kompensationsstrompfad mit einer der Ausgangsleitungen bzw. einer der Ausgangsleitungen des DC/DC-Wandlers verbunden.

Der erfindungsgemäße Hilfswandler kann zur Erdstromkompensation bei grundsätzlich allen DC/DC-Wandlern mit galvanischer Trennung zur Anwendung kommen. Bevorzugt ist sein Einsatz bei solchen DC/DC-Wandlern, bei denen die galvanische Trennung auf kapazitive Weise bewirkt ist. Hierzu zählen die aus der EP 0 696 841 A1 bekannte SEPIC-Variante und alle Ausführungsformen des aus der EP 2 023 475 A1 bekannten DC/DC-Wandler mit galvanischer Trennung.

Insbesondere kann der neue DC/DC-Wandler als Wechselstromvorwärtspfad mindestens einen eine Resonanzinduktivität und eine Resonanzkapazität aufweisenden Resonanzkreis umfassen, der eingangsseitig über mindestens zwei getaktete Schalter jeweils mit einer der beiden Eingangsleitungen elektrisch leitend verbindbar ist.

Dieser Resonanzkreis ist abweichend von der Lehre der EP 2 023 475 A1 vorzugsweise ungeteilt, d. h. wechselweise direkt mit den beiden Eingangsleitungen einer nachgeschalteten Wechselrichterbrücke elektrisch leitend verbindbar. Dies ist gleichbedeutend damit, dass auch der Zwischenkreis des neuen DC/DC-Wandlers ungeteilt ist und dass die Grundübersetzung des neuen DC/DC-Wandlers - abgesehen von der Möglichkeit, Hochsetzsteller vorzusehen-maximal 1 : 1 beträgt. Er ist damit insbesondere für Gleichstromquellen geeignet, die eine hohe Eingangsgleichspannung bereitstellen. Bei dem neuen DC/DC-Wandler ist auch das Bezugspotential für die Ausgangsgleichspannung frei wählbar. Die Ausgangsgleichspannung wird insbesondere nicht zwangsweise gegenüber einem geerdeten Mittelpunkt bereitgestellt.

Wenn der Resonanzkreis ungeteilt ist, bedeutet dies hier nicht, dass die Resonanzkapazität nicht durch zwei oder mehr einzelne Kondensatoren bereitgestellt werden darf, die in Reihe und/oder auch parallel geschaltet sind, solange eine am Ausgang des Resonanzkreises vorgesehene Gesamtkapazität ungeteilt ist, das heißt der Resonanzkreis nicht mehrere getrennte Ausgänge mit mehreren Teilkapazitäten aufweist. Bei dem neuen DC/DG-Wandler kann die Reihenfolge der Resonanzinduktivität und der Resonanzkapazität auch umgekehrt sein, so dass die Resonanzkapazität am Eingang und die Resonanzinduktivität am Ausgang des Resonanzkreises liegt. Auch wenn diese umgekehrte Rolle in den folgenden konkreten Ausführungsbeispielen keine Berücksichtigung findet, ist sie der dort gezeigten Reihenfolge gleichwertig.

Bei dem neuen DC/DC-Wandler ist eine Kaskadierung des in den beiden letzten Absätzen beschriebenen Grundprinzips möglich, indem mehrere Resonanzkreise ausgangsseitig parallel zueinander an die dieselben Ausgangsleitungen angeschlossen werden. Eingangsseitig sind diese Resonanzkreise dann an maximal eine der beiden Eingangsleitungen des DC/DC-Wandlers und eine oder zwei jeweils ein dazwischen liegendes Potential führende Zwischenpotentialeingangsleitungen über je einen getakteten Schalter angeschlossen. Ab dem dritten Resonanzkreis gibt es mindesten einen, der eingangsseitig über seine beiden getakteten Schalter wechselweise mit zwei Zwischenpotentialeingangsleitungen elektrisch leitend verbindbar ist. Auch jeder solche Resonanzkreis ist ausgangsseitig wechselweise mit den beiden Ausgangsleitungen elektrisch leitend verbindbar. Diese Kaskadierung kann als Umkehrung der aus der EP 2 023 475 A1 bekannten Kaskadierung interpretiert werden.

Bei dem neuen DC/DC-Wandler kann die Resonanzkapazität am Ausgang des Resonanzkreises über je eine Gleichrichterdiode an die beiden Ausgangsleitungen oder ein dazwischen liegendes Potential führende Zwischenpotentialausgangsleitungen angeschlossen sein, wobei sich eine elektrisch leitende Verbindung je nach Richtung der Potentialdifferenz über die Gleichrichterdioden passiv einstellt. Eine bessere Regelbarkeit des neuen DC/DC-Wandlers ergibt sich, wenn die Resonanzkapazität am Ausgang des Resonanzkreises wechselweise über getaktete Schalter mit den Ausgangsleitungen oder ein dazwischen liegendes Potential führende Zwischenpotentialausgangsleitungen elektrisch leitend verbindbar ist. Diesen getakteten Schaltern können Freilaufdioden parallel geschaltet sein.

Der Wechsetstromrückftusspfad des neuen DC/DC-Wandlers mit Resonanzkreis kann eingangsseitig mit den Eingangsleitungen des DC/DC-Wandlers oder den Zwischenpotentialeingangsleitungen und ausgangsseitig mit den Ausgangsleitungen des DC/DC-Wandlers oder den Zwischenpotentialausgangsleitungen elektrisch leitend verbunden oder verbindbar sein. Über diesen Wechselstromrückflusspfad können sich die über den DC/DC-Wandler fließenden Ströme bereits zum großen Teil kompensieren. Dabei ist es von grundsätzlicher Bedeutung, das heißt, zum Beispiel auch bei einem geteilten Zwischenkreis nach dem Stand der Technik von Vorteil, wenn in dem Wechselstromrückflusspfad zwischen seinen Verzweigungen zu den Eingangsleitungen des DC/DC-Wandlers einerseits und den Ausgangsleitungen des DC/DC-Wandlers andererseits eine Kapazität vorgesehen ist, die die beiden genannten Verzweigungen galvanisch voneinander trennt. Diese Kapazität stellt die galvanische Trennung unabhängig davon bereit, wie die Verzweigungen des Wechselstromrückflusspfads zu den Leitungen an seiner Eingangsseite und seiner Ausgangsseite im Einzelnen ausgebildet sind.

Vorzugsweise ist bei dem neuen DC/DC-Wandler mit mehreren Resonanzkreisen jedem Resonanzkreis ein Wechselstromrückflusspfad zugeordnet, um den über den Resonanzkreis abfließenden Strom möglichst vollständig zurückzuführen. Jeder dieser Resonanzkreise ist eingangsseitig und ausgangsseitig mit denselben Leitungen elektrisch leitend verbunden oder verbindbar, mit denen der zugehörige Resonanzkreis elektrisch leitend verbindbar ist.

Der Kompensationsstrompfad ist auch dann, wenn er neben der Verbindungskapazität eine Induktivität aufweist, nicht als Resonanzkreis ausgelegt. D. h. er weist insbesondere nicht dieselbe Resonanzfrequenz wie einer der als Resonanzkreis ausgelegten Wechselstromvorwärtspfade auf.

Zwar kann der Wechselstromrückflusspfad eingangsseitig mit den Eingangsleitungen oder den Zwischenpotentialeingangsleitungen und ausgangsseitig mit den Ausgangsleitungen oder den Zwischenpotentialausgangsleitungen jeweils über zwei Kapazitäten verbunden sein. Auf diese Weise wird ein vollkommen passiver Wechselstromrückflusspfad bereitgestellt. Dabei können mehrere derartige Wechselstromrückflusspfade ausgangsseitig über dieselben zwei Kapazitäten mit den Ausgangsleitungen verbunden sein.

Bevorzugt ist es bei dem neuen DC/DC-Wandler aber, den Wechselstromrückflusspfad ebenso wie den Resonanzkreis aktiv auszubilden, indem er zumindest eingangsseitig oder ausgangsseitig über zwei Schalter an die Eingangsleitungen oder die Zwischenpotentialeingangsleitungen bzw. die Ausgangsleitungen oder die Zwischenpotentialausgangsleitungen angeschlossen ist, um weitere Möglichkeiten zur Beeinflussung der Ausgangsgleichspannung und des über den DC/DC-Wandler fließenden Stroms zu haben. Auf der jeweils anderen Seite kann der Wechselstromrückflusspfad ebenfalls über Schalter oder auch nur über Gleichrichterdioden an die Ausgangsleitungen oder die Zwischenpotentialausgangsleitungen bzw. die Eingangsleitungen oder die Zwischenpotentialeingangsleitungen angeschlossen sein. Soweit hier eingangseitig oder ausgangsseitig Schalter vorgesehen sind, können diesen Freilaufdioden parallel geschaltet sein. Indem die galvanische Entkopplung bei einem erfindungsgemäßen-Wechselstromrückflusspfad bereits durch die zwischen seinen eingangs- und ausgangsseitigen Verzweigungen angeordnete Kapazität bewirkt wird, können die eingangs- und ausgangsseitigen Anbindungen des Wechselstromrückflusspfads von der Aufgabe der galvanischen Entkopplung frei ausgestaltet werden.

Ganz besonders bevorzugt ist es bei dem neuen DC/DC-Wandler, wenn in dem Wechselstromrückflusspfad zwischen seiner eingangsseitigen Verzweigung zu den Eingangsleitungen oder den Zwischenpotentiateingangsteitungen und seiner ausgangsseitigen Verzweigung zu den Ausgangsleitungen oder den Zwischenpotentialausgangsleitungen nicht nur eine Kapazität sondern auch eine Resonanzinduktivität vorgesehen ist, so dass der Wechselstromrückflusspfad als weiterer Resonanzkreis ausgebildet ist. Dieser weitere Resonanzkreis kann grundsätzlich dieselben Kenngrößen wie der zugehörige Resonanzkreis aufweisen. Auch bei dem Resonanzkreis ist die Reihenfolge der Kapazität und der Resonanzinduktivität ohne eigene Bedeutung; sie kann insbesondere auch unabhängig von der Reihenfolge der Resonanzkapazität und der Resonanzinduktivität in dem zu dem jeweiligen Wechselstromrückflusspfad zugehörigen Resonanzkreis gewählt werden.

Zusätzliche Regelmöglichkeiten in Bezug auf die Ausgangsgleichspannung weist der neue DC/DC-Wandler dann auf, wenn zwischen jedem Resonanzkreis und dem ihm zugeordneten Wechselstromrückflusspfad eingangsseitig nach ihrer Verzweigung zu den beiden Eingangsleitungen oder den Zwischenpotentialeingangsleitungen und/oder ausgangsseitig vor ihrer Verzweigung zu den beiden Ausgangsleitungen oder den Zwischenpotentialausgangsleitungen mindestens ein getakteter Verbindungsschalter vorgesehen ist. Dabei wirkt sich eine Betätigung eines derartigen eingangsseitigen Verbindungsschalters tiefsetzstellend und eine Betätigung eines derartigen ausgangsseitigen Verbindungsschalters hochsetzstellend aus. Statt jeweils nur eines Verbindungsschalters können zum Beispiel auch zwei eingangsseitig und/oder ausgangsseitig in Reihe geschaltete Verbindungsschalter vorgesehen werden, deren Mittelpunkt mit einem Zwischenpotential verbunden ist, das durch zwischen die Eingangsleitungen bzw. die Ausgangsleitungen des DC/DC-Wandlers in Reihe geschaltete Kapazitäten definiert ist. Dann sind die Ein- bzw. Ausgänge des Resonanzkreises und dem ihm zugeordneten Wechselstromrückflusspfads nicht nur miteinander sondern auch einzeln mit diesem Zwischenpotential verbindbar.

Auf die Eigenschaften des neuen DC/DC-Wandlers kann auch dadurch positiv Einfluss genommen werden, dass jeder Resonanzkreis und der zugehörige Wechselstromrückflusspfad ausgangsseitig vor ihrer Verzweigung zu den beiden Ausgangsleitungen oder den Zwischenpotentialausgangsleitungen über eine Kapazität und/oder Induktivität miteinander verbunden sind.

In einer besonderen Ausführungsform des neuen DC/DC-Wandlers sind jeder Resonanzkreis und der zugehörige Wechselstromrückflusspfad eingangsseitig über zwei getaktete Schalter jeweils mit einer der beiden Eingangsleitungen oder einer ein dazwischen liegendes Potential führenden Zwischenpotentialeingangsleitung elektrisch leitend verbindbar, wobei in einer der Eingangsleitungen oder Zwischenpotentialeingangsleitungen ein weiterer getakteter Schalter vorgesehen ist. Auf diese Weise wird am Eingang des neuen DC/DC-Wandlers eine sogenannte H5-Schattung realisiert. Eine solche H5-Schaltung kann auch im Bereich einer nachgeschalteten Wechselrichterbrücke vorgesehen sein. Ebenso können andere bekannte Schaltungskonzepte bei dem DC/DC-Wandler und der Wechselrichterbrücke Anwendung finden. So kann der DC/DC-Wandler beispielsweise ein Drei-Level NPC (Neutral Point Clamped) Converter sein. Andere anwendbare Schaltungsprinzipien sind unter den Stichworten "Heric" und "Flying Capacitor" bekannt.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

### FIGURENBESCHREIBUNG

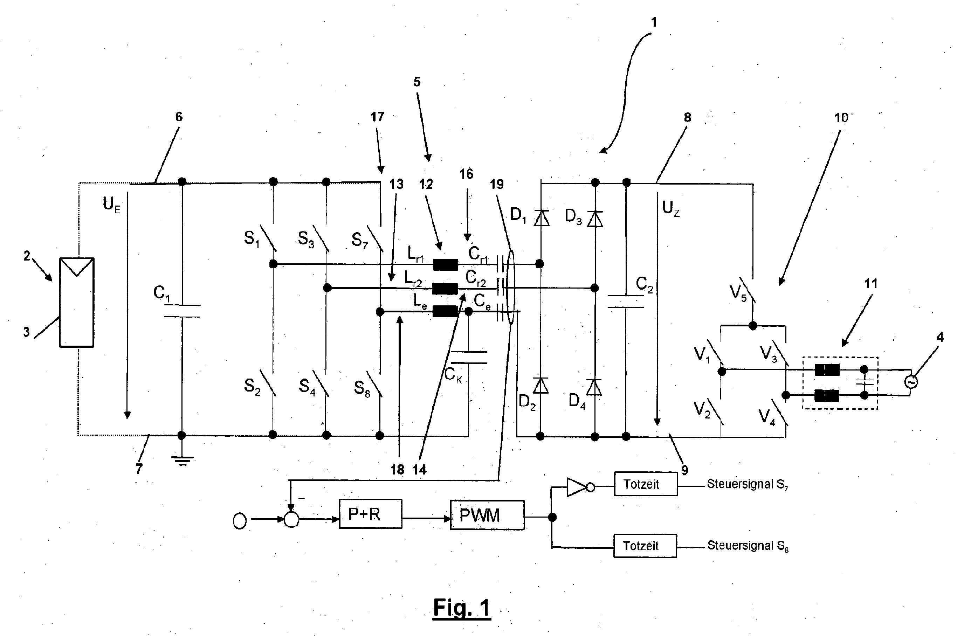

Der in **Fig. 1** skizzierte Wechselrichter 1 dient zum Einspeisen von elektrischer Energie von einer Gleichstromquelle 2, vorzugsweise einer Photovoltaikanlage 3, in ein hier einphasiges Wechselstromnetz 4. Der Wechselrichter 1 weist einen DC/DC-Wandler 5 auf, der eine zwischen Eingangsleitungen 6 und 7 anliegende Eingangsgleichspannung U_{E} in eine Ausgangsgleichspannung U_{Z} umwandelt. Die Ausgangsgleichspannung U_{Z} liegt zwischen Ausgangsleitungen 8 und 9 an, die zugleich Eingangsleitungen einer Wechselrichterbrücke 10 des Wechselrichters 1 sind, welche unter Zwischenschaltung eines Sinusfilters 11 Wechselstrom in das Wechselstromnetz 4 einspeist. Dabei richtet die Wechselrichterbrücke 10 die Ausgangsgleichspannung U_{Z}, die zugleich Zwischenkreisgleichspannung ist, in eine Ausgangswechselspannung um. Die Wechselrichterbrücke 10 ist hier als H5-Schaltung ausgebildet und weist insgesamt fünf getaktete Schalter V₁ bis V₅ auf, die in grundsätzlich bekannter Weise angesteuert werden, um ausgehend von der Ausgangsgleichspannung U_{Z} elektrische Energie in das Wechselstromnetz 4 einzuspeisen. Der DC/DC-Wandler 5 weist einen Resonanzkreis 12 mit einer Resonanzinduktivität Lᵣ₁ und einer Resonanzkapazität Cᵣ₁ auf. Eingangsseitig wird dieser Resonanzkreis 12 über zwei getaktete Schalter S₁ und S₂, denen Freilaufdioden parallel geschaltet werden können, wechselweise mit den Eingangsleitungen 6 und 7 des Wechselrichters 1 elektrisch leitend verbunden. Ausgangsseitig erfolgt eine wechselweise elektrisch leitende Verbindung des Resonanzkreises 12 mit den Eingangsleitungen 8 und 9 der Wechselrichterbrücke 10 über Gleichrichterdioden D₁ und D₂. Parallel, vielleicht genauer gesagt antiparallel zu dem Resonanzkreis 12 ist ein Wechselstromrückflusspfad 13 vorgesehen, der an dieselben Leitungen 6 und 7 einerseits sowie 8 und 9 andererseits angeschlossen ist wie der Resonanzkreis 12, und der es dem über den Resonanzkreis 12 abfließenden Strom erlaubt, zu der Gleichstromquelle 2 zurückzufließen. Dabei ist in dem Wechsetstromrückflusspfad 13 eine Kapazität Cᵣ₂ vorgesehen, die zusammen mit der Resonanzkapazität Cᵣ₁ für eine vollständige galvanische Trennung zwischen den Eingangsleitungen 6 und 7 des Wechselrichters 1 und den Eingangsleitungen 8 und 9 der Wechselrichterbrücke 10 sorgt. Weiterhin ist hier in dem Wechselstromrückflusspfad 13 eine Resonanzinduktivität Lᵣ₂ vorgesehen, die den Wechselstromrückflusspfad 13 als weiteren Resonanzkreis 14 ausgestaltet. Eingangsseitig ist der Wechselstromrückflusspfad 13 hier über zwei weitere getaktete Schalter S₃ und S₄, denen ebenfalls Freilaufdioden parallel geschaltet werden können, an die Eingangsleitungen 6 und 7 angeschlossen. Ausgangsseitig ist der Wechselstromrückflusspfad 13 über Gleichrichterdioden D₃ und D₄ an die Eingangsleitungen 8 und 9 der Wechselrichterbrücke 10 angeschlossen. Damit ist der Wechselstromrückflusspfad 13 genauso ausgebildet wie der Resonanzkreis 12. Mit den Schaltern S₁ und S₂ bzw. S₃ und S₄ werden diese beiden Resonanzkreise 12 und 14 zu gegenphasigen Schwingungen gezwungen. Indem auch der Wechselstromrückflusspfad hier zumindest einseitig durch getaktete Schalter S₃ und S₄ an die Eingangsleitungen 6 und 7 angebunden ist, besteht eine zusätzliche Möglichkeit zur Einflussnahme auf den insgesamt über den Resonanzkreis 12 und den Wechselstromrückflusspfad 13 fließenden Strom. Zwischen den Eingangsleitungen 6 und 7 und den Eingangsleitungen 8 und 9 sind Pufferkapazitäten C₁ bzw. C₂ vorgesehen.

Die Grundübersetzung des Wechselrichters 1 zwischen der Eingangsgleichspannung U_{E} und der Ausgangsgleichspannung U_{Z} liegt bei 1:1. Durch ein getaktetes miteinander Verbinden des Resonanzkreises 12 und des Wechselstromrückflusspfads 13 von der Gleichstromquelle 2 aus gesehen hinter ihrer Verzweigung zu den Eingangsleitungen 6 und 7 über die Schalter S₁ und S₂ bzw. die Schalter S₃ und S₄ mittels eines hier nicht dargestellten Schalters kann auf die Zwischenkreiswechselspannung U_{Z} tiefsetzstellend eingewirkt werden, um neben der Ansteuerung der Schalter S₁ und S₂ sowie S₃ und S₄ relativ zu der Resonanzfrequenz des Resonanzkreises 12 eine weitere Anpassungsmöglichkeit des Wechselrichters 1 an die von der Gleichstromquelle 12 generierte Eingangsgleichspannung U_{E} zu schaffen. Durch einen hier ebenfalls nicht dargestellten getakteten Schalter, mit dem der Resonanzkreis 12 und der Wechselstromrückflusspfad 13 vor ihrer ausgangsseitigen Verzweigung zu den Eingangsleitungen 8 und 9 miteinander elektrisch leitend verbindbar sind, kann demgegenüber hochsetzstellend auf die Ausgangsgleichspannung U_{Z} eingewirkt werden. Statt eines solchen ausgangsseitigen Schalter dem Resonanzkreis 12 und dem Wechselstromrückflusspfaden 13 kann an dieser Stelle eine Verbindung über eine zusätzliche Reihenschaltung aus Kapazität und Induktivität vorgesehen sein, die die passiven Eigenschaften des DC/DC-Wandlers 5 positiv beeinflusst. Statt hier sowohl eine Kapazität als auch eine Induktivität vorzusehen, kann auch nur eine Kapazität oder nur eine Induktivität vorgesehen werden. In diesem Zusammenhang ist zu betonen, dass auch die Resonanzinduktivität Lᵣ₂ in dem Wechselstromrückflusspfad 13 grundsätzlich optional sind. Weiterhin können die Schalter S₁ bis S₄ nach Art einer H5-Schaltung um einen weiteren Schalter in einer der Eingangsleitungen 6 und 7 ergänzt werden, der ebenfalls tiefsetzstellend für die Ausgangsgleichspannung U_{Z} getaktet werden kann. Insgesamt weist daher bereits die Ausführungsform des Wechselrichters 1 gemäß Fig. 1 ein Vielzahl von Möglichkeiten der Einflussnahme auf die Ausgangsgleichspannung U_{Z} auf.

Zusätzlich kann der DC/DC-Wandler 5 zwei oder mehr Resonanzkreise 12 aufweisen, die als solche identisch aus Resonanzinduktivitäten Lᵣ₁ und Resonanzkapazitäten Cᵣ₁ ausgebildet sind und parallel zueinander z. B. über Gleichrichterdioden D₁ und D₂ an die Ausgangsleitungen 8 und 9 angeschlossen sind. Auch den einzelnen Resonanzkreisen 12 dann jeweils zugeordnete Wechselstromrückflusspfade 13 können ausgangsseitig, das heißt zu den Ausgangsleitungen 8 und 9 zueinander parallel geschaltet. Sie könne hier aber auch zusammen geschlossen und über gemeinsame Kapazitäten an die Ausgangsleitung angeschlossen sein. Eingangsseitig sind die Resonanzkreise 12 und die zugehörigen Wechselstromrückflusspfade 13 jedoch vorzugsweise nicht an beide Eingangsleitungen 6 und 7 des Wechselrichters 1, sondern über Schalter S₁ und S₂ jeweils maximal an eine der beiden Eingangsleitungen 6 und 7 und an eine ein zwischen den Eingangsleitungen 6 und 7 liegendes Potential führende Zwischenpotentialeingangsleitung angeschlossen. An einer solchen Zwischenpotentialeingangsleitung liegt ein durch Kapazitäten definiertes Zwischenpotential an. Entsprechend weist der Wechselrichter 1 dann eine Grunduntersetzung von n : 1 auf, wobei n die Anzahl der parallel geschalteten Resonanzkreise 12 ist.

Als Merkmal des neuen DC/DC-Wandlers 5 ist hier ein Hilfswandler 17 vorgesehen, um eine über den Resonanzkreis 12 und den Wechselstromrückflusspfad 13 fließende Stromsumme zu kompensieren, damit diese keinen Strom über Erde provoziert. Der Hilfswandler weist hier zwei getaktete Schalter S₇ und S₈ auf, mit denen ein Kompensationsstrompfad 18 eingangsseitig wechselweise mit den Eingangsleitungen 6 und 7 verbunden wird. Der Kompensationsstrompfad 18 verläuft parallel zu dem Resonanzkreis 12 und dem Wechselstromrückflusspfad 13. In ihm ist eine Verbindungskapazität Cₑ angeordnet, über die er hier an die Eingangsleitung 9 der Wechselrichterbrücke 10 angeschlossen ist. Zusätzlich ist der Wechselstromrückflusspfad 18 über eine Kopplungskapazität C_{K} an die hier geerdete Eingangsleitung 7 angeschlossen, und in ihm ist zwischen den Kapazitäten Cₑ und C_{K} einerseits und den Schaltern S₇ und S₈ andererseits eine Induktivität Lₑ vorgesehen. Durch die Kapazitäten Cₑ und C_{K} wir die galvanische Trennung auch längs des Kompensationsstrompfads 18 sichergestellt. Eine Steuerung 20 für die Ansteuerung der getakteten Schalter S₇ und S₈ des Hilfswandlers 17 regelt die über den DC/DC-Wandler 5 fließende Stromsumme auf null. Mit einem Ringkern 19 und einer hier nicht dargestellte Induktionsspule als Summenstromwandler wird ein Eingangssignal für die Steuerung 20 generiert.

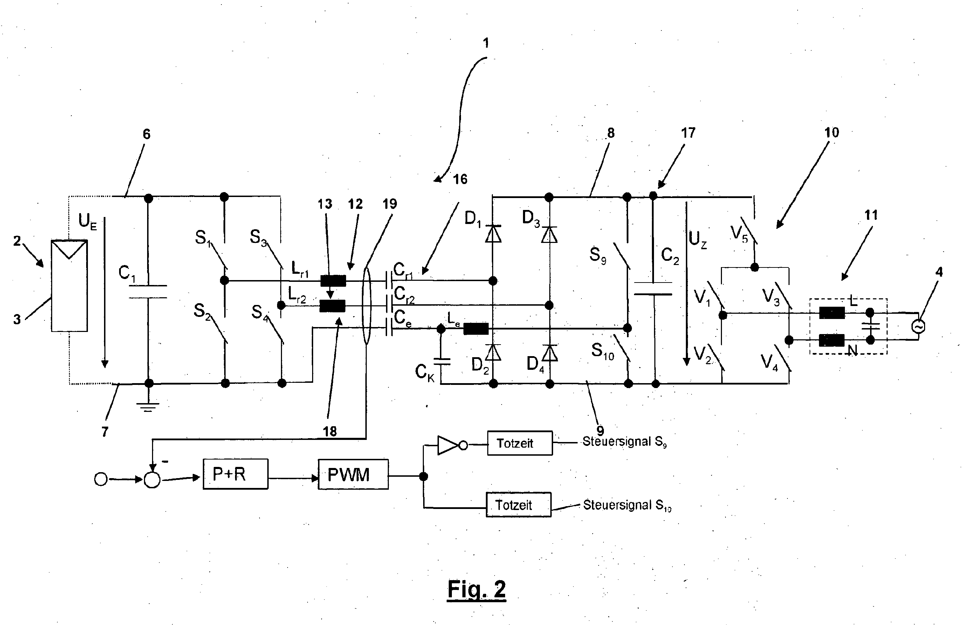

Bei der Ausführungsform des Wechselrichters 1 gemäß **Fig. 2** ist anders als in Fig. 1 der Kompensationsstrompfad 18 mit dem Hilfswandler 17 über getaktete Schalter S₉ und S₁₀ an die Eingangsleitungen 8 und 9 der Wechselrichterbrücke 10 angeschlossen. Entsprechend weist er die Induktivität Lₑ ausgangsseitig der Verbindungskapazität Cₑ auf, und auch die Kopplungskapazität C_{K} ist zu der Eingangsleitung 9 der Wechselrichterbrücke 10 hin vorgesehen. Unmittelbar verbunden ist der Kompensationsstrompfad 18 hier mit der Eingangsleitung 7. Die Steuerung 20 für die Schalter S₉ und S₁₀ entspricht aber im Wesentlichen der Steuerung 20 für Schalter S₇ und S₈ gemäß Fig. 8, wobei auch hier nur eine von mehreren Möglichkeiten zur Ausführung der Steuerung 20 skizziert ist. Wenn mehrere Resonanzkreise 12 und zugehörige Wechselstromrückflusspfade 13 parallel geschaltet sind, ist vorzugsweise nur ein einziger Hilfswandler 17 und ein einziger Kompensationsstrompfad 18 vorgesehen, obwohl grundsätzlich auch je Paar aus Resonanzstromkreis 12 und zugehörigem Wechselstromrückflusspfad 13 eine solcher Kombination aus Hilfswandler 17 und Kompensationsstrompfad 18 vorgesehen werden könnte, um jede der über ein solches Paar fließenden Teilstromsummen auf null zu kompensieren.

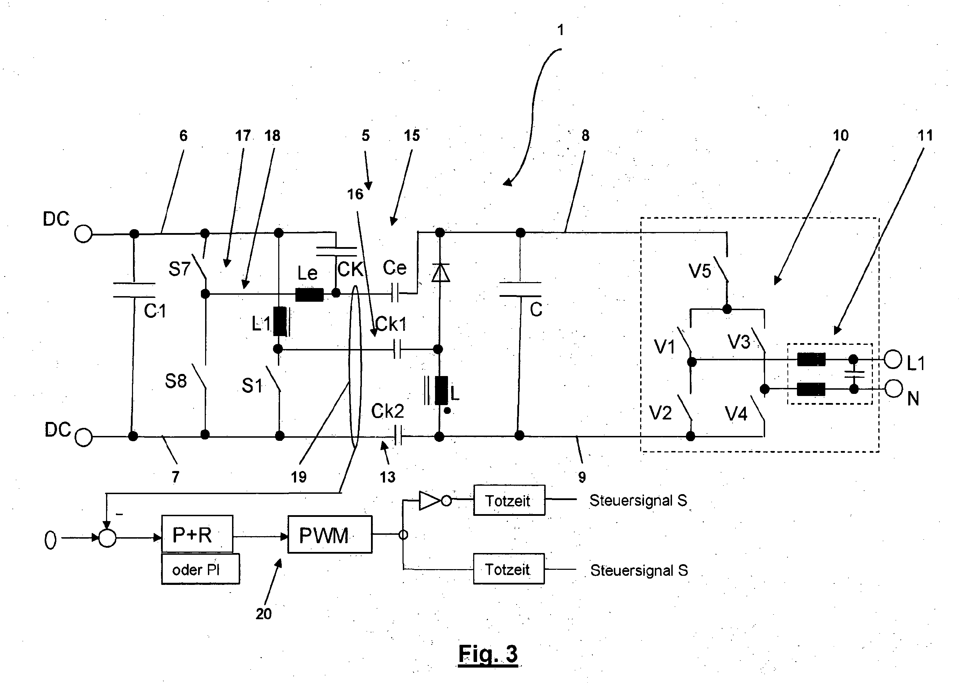

**Fig. 3** skizziert einen Wechselrichter 1, ohne dass hier die Gleichstromquelle 2 wie in den Fig. 1 und 2 wiedergegeben ist. bezeichnet sind hier nur die Eingangspole DC⁺ und DC⁻. Dasselbe gilt für das Wechselstromnetz 4, für das die Anschlüsse L₁ und N stehen. Der DC/DC-Wandler 5 ist hier als SEPIC 15 vorgesehen, der im wesentlichen aus einer eingangsseitigen Kombination, aus einer Induktivität L₁ und einem Schalter S₁, einem Kopplungskondensator Cₖ₁ und einer ausgangsseitigen Induktivität L₂ N₃ mit einer Diode D₁ aufgebaut ist. Als erste Besonderheit ist hier gemäß der Lehre der EP 0 696 841 A1 nicht nur in dem Wechselstromvorwärtspfad 16 die Kopplungskapazität Cₖ₁ vorgesehen, sondern auch in dem Wechselstromrückflusspfad 13 eine Kopplungskapazität Cₖ₂. So wird auf kapazitive Weise eine galvanische Trennung zwischen den Eingängsleitungen 6 und 7 und den Ausgangsleitungen 8 und 9 dieses DC/DC-Wandlers 5 erreicht. Dabei ist auch hier ein Hilfswandler 17 vorgesehen, der grundsätzlich denselben Aufbau aufweist wie der Hilfswandler 17 gemäß Fig. 1, auch wenn hier die Kopplungskapazität Cₖ an die Eingangsleitung 6 und die Verbindungskapazität Cₑ an die Ausgangsleitung 8 angeschlossen ist. Auf die grundsätzliche Funktion des Hilfswandlers 4 zur Erdstromkompensation, in den die über den Ferritring 19 registrierte Strom durch Ansteuerung der Schalter S₇ und S₈ zu Null gemacht wird, hat dies keine Auswirkungen.

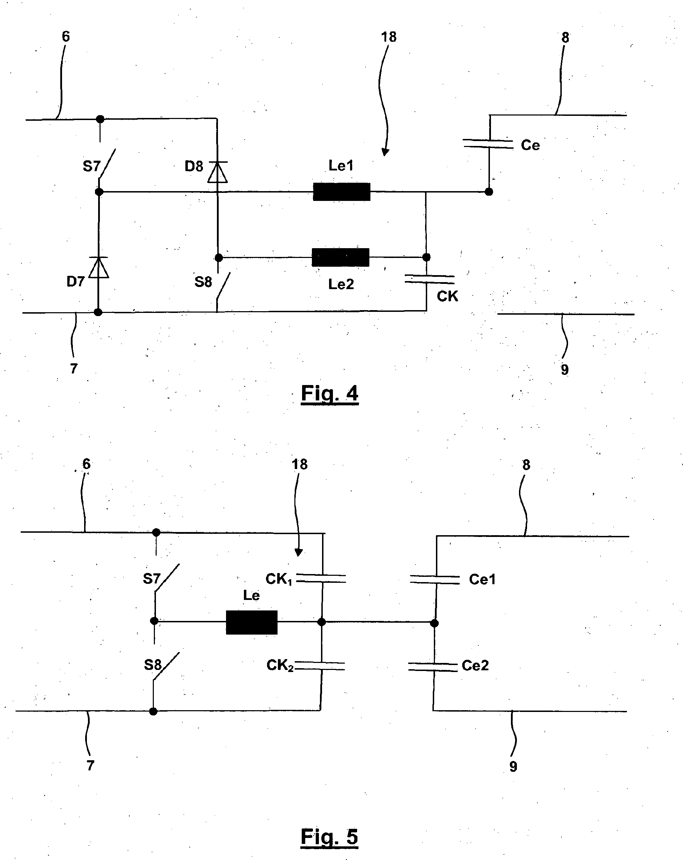

Bei dem in **Fig. 4** separat, d. h. ohne die weiteren Bestandteile des Wechselrichters außer den Eingangsleitungen 6 und 7 und den Ausgangsleitungen 8 und 9 skizzierten Kompensationsstrompfad 18 ist die Schaltbrücke zwischen den Eingangsleitungen 6 und 7 auf zwei Brücken aus jeweils einem der Schalter S₇ und S₈ und einer Diode D₇ bzw. D₈ aufgeteilt. Entsprechend ist die Induktivität Lₑ in zwei Teilinduktivitäten Lₑ₁ und Lₑ₂ aufgeteilt. Alle anderen Komponenten des Kompensationsstrompfads 18 entsprechen Fig. 1, außer dass der Kompensationsstrompfad 18 in Fig. 4 ausgangsseitig an die Ausgangsleitung 8 angeschlossen ist. Die grundsätzliche Funktion des Kompensationsstrompfads 18 gemäß Fig. 4 entspricht aber derjenigen gemäß Fig. 1.

Dies gilt auch für die Ausführungsform des Kompensationsstrompfads 18 gemäß Fig. 5. Hier sind nicht die beiden Schalter S₇ und S₈ auf zwei Brücken zwischen den Eingangsleitungen 6 und 7 verteilt, sondern die Kopplungskapazität C_{K} ist in zwei Kopplungskapazitäten C_{K1} und C_{K2} aufgeteilt. Dies entspricht der kapazitiven Kopplung des Kompensationsstrompfads 18 ausgangsseitig der Induktivität Lₑ mit einem Potential, das zwischen den Potentialen der Eingangleitungen 6 und 7 liegt. Auch die Verbindungskapazität Cₑ, über die der Kompensationsstrompfad 18 ausgangsseitig an die Ausgangsleitungen 8 und 9 angeschlossen ist, ist hier in zwei Verbindungskapazitäten Cₑ₁ und Cₑ₂ aufgeteilt, was dem Anschluss an ein Potential zwischen den Potentialen der Ausgangsleitungen 8 und 9 unter Zwischenordnung einer Verbindungskapazität entspricht. Es versteht sich, dass die Aufteilung der beiden Kapazitäten C_{K} und Cₑ auch unabhängig voneinander vorgenommen werden kann und dass eine oder beide entsprechenden Aufteilungen auch bei den anderen Ausführungsformen des Kompensationsstrompfads 18 gemäß den Fig. 1 bis 4 möglich ist.

### BEZUGSZEICHENLISTE

- 1: Wechselrichter
- 2: Gleichstromquelle
- 3: Photovoltaikpaneel
- 4: Wechselstromnetz
- 5: DC/DC-Wandler
- 6: Eingangsleitung
- 7: Eingangsleitung
- 8: Ausgangsleitung
- 9: Ausgangsleitung
- 10: Wechselrichterbrücke
- 11: Sinusfilter
- 12: Resonanzkreis
- 13: Wechselstromrückflusspfad
- 14: Resonanzkreis
- 15: SEPIC
- 16: Wechselstromvorwärtspfad
- 17: Hilfswandler
- 18: Kompensationsstrompfad
- 19: Ferritring
- 20: Steuerung

## Patentansprüche

1. DC/DC-Wandler (5) zum Umwandeln einer zwischen zwei Eingangsleitungen (6 und 7) auf einer Eingangsseite des DC/DC-Wandlers (5) anliegenden Eingängsgleichspannung (U_{E}) in eine zwischen zwei Ausgangsleitungen (8 und 9) auf einer Ausgangsseite des DC/DC-Wandlers (5) anliegende Ausgangsgleichspannung (U_{Z}), wobei der DC/DC-Wandler (5) aufweist:
- mindestens einen Wechselstromvorwärtspfad (16), der über elektrische Bauteile eingangsseitig mit den Eingangsleitungen (6 und 7) und ausgangsseitig mit den Ausgangsleitungen (8 und 9) verschaltet ist, wobei die elektrischen Bauteile zwischen dem Wechselstromvorwärtspfad (16) und mindestens einer der Eingangsleitungen (6 und 7) und mindestens einer der Ausgangsleitungen (8 und 9) schaltende elektrische Bauteile sind, von denen mindestens eines angesteuert ist; und
- mindestens einen Wechselstromrückflusspfad (13) für einen Rückfluss von über den Wechselstromvorwärtspfad (16) abfließendem Strom, der über Verbindungen eingangsseitig mit mindestens einer der Eingangsleitungen (6 und 7) und ausgangsseitig mit mindestens einer der Ausgangsleitungen (8 und 9) verbunden ist, wobei die eingangsseitigen und ausgangsseitigen Verbindungen entweder danerhaft elektrisch leitende Verbindungen oder elektrisch schaltende Verbindungen sind;
- wobei die Eingangsleitungen (6 und 7) durch Kapazitäten (Cᵣ₁, Cᵣ₂) in allen Wechselstrompfaden (16, 13) galvanisch von den Ausgangsleitungen (8 und 9) getrennt sind, **gekennzeichnet durch**
- einen Hilfswandler (17) zum Kompensieren einer Stromsumme über alle Wechselstromvorwärtspfade (16) und Wechselstromrückflusspfade (13), der nicht mehr als 10% des aktnell über alle wechselstrom vorwärtsplade (16) abfließenden stroms überträgt und der einen zusätzlichen, parallel zu allen Wechselstromvorwärtspfaden (16) und Wechselstromrückflusspfaden (13) verlaufenden Kompensationsstrompfad (18) an dessen einem Ende über zwei angesteuerte Schalter (S₇, S₈ bzw. S₉, S₁₀) wechselweise mit zwei Leitungen auf derselben Seite des DC/DC-Wandlers (5), die aus der Gruppe von Leitungen ausgewählt sind, die
- die Eingangsleitungen (6, 7),
- zwischen den Potentialen der Eingangsleitungen liegende Zwischenpotentiale führende Zwischenpotentialeingangsleitungen,
- die Ausgangsleitungen (8 und 9) und
- zwischen den Potentialen der Ausgangsleitungen liegende Zwischenpotentiale führende Zwischenpotentialausgangsleitungen
umfasst, elektrisch leitend verbindet, wobei der Kompensationsstrompfad (18) an seinem anderen Ende über mindestens eine Verbindungskapazität (Cₑ) mit mindestens einer Leitung auf der derselben Seite des DC/DC-Wandlers (5) gegenüberliegenden Seite, die aus der Gruppe von Leitungen ausgewählt ist, dauerhaft elektrisch leitend verbunden ist.

2. DC/DC-Wandler nach Anspruch 1, **wobei** in dem Kompensationsstrompfad (18) eine Induktivität (Lₑ) mit der Verbindungskapazität (Cₑ) in Reihe geschaltet ist.

3. DC/DC-Wandler nach Anspruch 1 oder 2, **wobei** der Kompensationsstrompfad (18) an einem Punkt zwischen der Verbindungskapazität (Cₑ) und den getakteten Schaltern (S₇, S₈; S₉, S₁₀) über eine Kopplungskapazität (C_{K}) mit einer der beiden Leitungen, mit denen der Hilfswandler (17) den Kompensationsstrompfad (18) über die angesteuerten Schalter (S₇, S₈; S₉, S₁₀) wechselweise verbindet, elektrisch leitend verbunden ist.

4. DC/DC-Wandler nach Anspruch 2 und 3, **wobei** der Punkt zwischen der Verbindungskapazität (Cₑ) und der Induktivität (Lₑ) liegt.

5. DC/DC-Wandler nach einem der Ansprüche 1 bis 4, **wobei** eine Steuerung (20) des Hilfswandlers (17) eine Stromsumme über alle Wechselstromvorwärtspfade (16) und Wechselstromrückflusspfade (13) sowie den Kompensationsstrompfad (18) erfasst und gegen null regelt.

6. DC/DC-Wandler nach Anspruch 5, wobei die Steuerung (20) die getakteten Schalter (S₇, S₈; S₉, S₁₀) des Hilfswandlers (17) mit Pulweitenmodulation (PWM) ansteuert.

7. DC/DC -Wandler nach einem der Ansprüche 1 bis 6, **wobei** der DC/DC-Wandler (5) mindestens einen eine Resonanzinduktivität (Lᵣ₁) und eine Resonanzkapazität (Cᵣ₁) aufweisenden Resonanzkreis (12) als Wechselstromvorwärtspfad (16) umfasst, der eingangsseitig über mindestens zwei angesteuerte Schalter (S₁ und S₂) jeweils mit einer der beiden Eingangsleitungen (6 und 7) verschaltet ist.

8. DC/DC-Wandler nach einem der Ansprüche 1 bis 7, **wobei** mindestens ein Wechselstromrückflusspfad (13) eingangsseitig mit den Eingangsleitungen (6 und 7) und ausgangsseitig mit den Ausgangsleitungen (8 und 9) verbunden ist, wobei die Kapazität (Cᵣ₂) in dem Wechselstromrückflusspfad (13) zwischen seinen eingangsseitigen Verbindungen mit den Eingangsleitungen (6 und 7) und seinen ausgangsseitigen Verbindungen mit den beiden Ausgangsleitungen (8 und 9) angeordnet ist.

9. DC/DC-Wandler nach Anspruch 7, **wobei** jedem Resonanzkreis (12) ein Wechselstromrückflusspfad (13) zugeordnet ist, der eingangsseitig und ausgangsseitig mit denselben Leitungen (6, 7, 8, 9) verbunden ist, mit denen der zugehörige Resonanzkreis (12) verschaltet ist.

10. DC/DC-Wandler nach einem der Ansprüche 1 bis 9, **wobei** ein Wechselstromrückflusspfad (13) vorgesehen ist, der eingangsseitig mit den Eingangsleitungen (6 und 7) über zwei Kapazitäten und ausgangsseitig mit den Ausgangsleitungen (8 und 9) über zwei weitere Kapazitäten verbunden ist.

11. DC/DC-Wandler nach einem der Ansprüche 1 bis 9, **wobei** mehrere Wechselstromrückflusspfade (13) gemeinsam ausgangsseitig über zwei Kapazitäten mit den Ausgangsleitungen (8 und 9) verbunden sind.

12. DC/DC-Wandler nach Anspruch 7, **wobei** der Wechselstromrückflusspfad (13) über schaltende Verbindungen eingangsseitig mit beiden Eingangsleitungen (6 und 7) und ausgangsseitig mit beiden Ausgangsleitungen (8 und 9) verbunden ist, wobei die schaltenden Verbindungen auf mindestens einer Seite jeweils angesteuerte Schalter umfassen und wobei der Wechselstromrückflusspfad (13) als weiterer Resonanzkreis (14) ausgebildet ist und neben der Kapazität (Cᵣ₂) eine Resonanzinduktivität (Lᵣ₂) aufweist.

13. DC/DC-Wandler nach Anspruch 7 oder einem der voranstehenden, auf Anspruch 7 rückbezogenen Ansprüche, **wobei** jeder Resonanzkreis (12) und der ihm zugeordnete Wechselstromrückflusspfad (13) mindestens auf einer Seite des DC/DC-Wandlers (5) über einen angesteuerten Verbindungsschalter verbindbar sind.

14. DC/DC-Wandler nach Anspruch 7 oder einem der voranstehenden, auf Anspruch 7 rückbezogenen Ansprüche, **dadurch gekennzeichnet, dass** jeder Resonanzkreis (12) und der ihm zugeordnete Wechselstromrückflusspfad (13) ausgangsseitig durch eine Kopplungsverbindung elektrisch leitend miteinander verbunden sind, die aus einer Kapazität und einer Induktivität ausgewählt ist.

15. DC/DC-Wandler nach Anspruch **11, dadurch gekennzeichnet, dass** jeder Resonanzkreis (12) und der ihm zugeordnete Wechselstromrückflusspfad (13) eingangsseitig jeweils über zwei angesteuerte Schalter (S₁ und S₂, S₃ und S₄) mit jeweils einer der beiden Eingangsleitungen (6 und 7) verschaltet sind, wobei in einer eingangsseitigen Leitung, die aus den Eingangsleitungen (6 oder 7) und zwischen den Eingangsleitungen liegende Zwischenpotentiale führenden Zwischenpotentialeingangsleitungen ausgewählt sind, ein weiterer angesteuerter Schalter angeordnet ist.

## Claims

1. DC-to-DC converter (5) for converting a DC input voltage (U_{E}) present between two input lines (6 and 7) at an input side of the DC-to-DC converter (5) into a DC output voltage (U_{Z}) present between two output lines (8 and 9) at an output side of the DC-to-DC converter (5), the DC-to-DC converter (5) comprising:
- at least one alternating-current forward path (16), which is connected at its input side via electrical components to the input lines (6 and 7) and at its output side to the output lines (8 and 9), wherein the electrical components between the alternating-current forward path (16) and at least one of the input lines (6 and 7) and at least one of the output lines (8 and 9) are electrical switching components of which at least one is driven; and
- at least one alternating-current return path (13) for a return flow of current flowing via the alternating-current forward path (16), which alternating-current return path is connected at its input side via connections to at least one of the input lines (6 and 7) and at its output side to at least one of the output lines (8 and 9), wherein the input-side and output-side connections are either permanent electrically conductive connections or electrical switching connections;
- wherein the input lines (6 and 7) are galvanically isolated from the output lines (8 and 9) by capacitors (Cᵣ₁, Cᵣ₂) in all alternating-current paths (16, 13), **characterized by**
- an auxiliary converter (17) for compensating a total current via all alternating-current forward paths (16) and alternating-current return paths (13), which transmits no more than 10% of the present current flowing via all of the alternating-current forward paths (16), and which electrically conductively connects an additional compensation current path (18), which runs parallel to all of the alternating-current forward paths (16) and alternating-current return paths (13), at its one end via two driven switches (S₇, S₈ or S₉, S₁₀) alternately to two lines on the same side of the DC-to-DC converter (5) which are selected from the group of lines which comprises
- the input lines (6, 7),
- intermediate potential input lines which conduct intermediate potentials lying between the potentials of the input lines,
- the output lines (8 and 9), and
- intermediate potential output lines which conduct intermediate potentials lying between the potentials of the output lines,
wherein the compensation current path (18) is permanently electrically conductively connected at its other end via at least one connecting capacitor (Cₑ) to at least one line on the side opposite to the same side of the DC-to-DC converter (5), which line is selected from the group of lines.

2. DC-to-DC converter according to Claim 1, wherein an inductor (Lₑ) is connected in series with the connecting capacitor (Cₑ) in the compensation current path (18).

3. DC-to-DC converter according to Claim 1 or 2, wherein the compensation current path (18) is electrically conductively connected at a point between the connecting capacitor (Cₑ) and the driven switches (S₇, S₈, S₉, S₁₀) via a coupling capacitor (C_{K}) to one of the two lines to which the auxiliary converter (17) alternately connects the compensation current path (18) via the driven switches (S₇, S₈, S₉, S₁₀).

4. DC-to-DC converter according to Claim 2 and 3, wherein the point is arranged between the connecting capacitor (Cₑ) and the inductor (Lₑ).

5. DC-to-DC converter according to any of Claims 1 to 4, wherein a controller (20) of the auxiliary converter (17) determines a current sum of all alternating-current forward paths (16) and alternating-current return paths (13) and the compensation current path (18) and regulates it to zero.

6. DC-to-DC converter according to Claim 5, wherein the controller (20) drives the clocked switches (S₇, S₈, S₉, S₁₀) of the auxiliary converter (17) using pulsewidth modulation (PWM).

7. DC-to-DC converter according to any of Claims 1 to 6, wherein the DC-to-DC converter (5) comprises at least one resonant circuit (12), having a resonant inductor (Lᵣ₁) and a resonant capacitor (Cᵣ₁), representing the alternating-current forward path (16), which is connected at its input side via at least two driven switches (S₁ and S₂) to one of the two input lines (6 and 7) respectively.

8. DC-to-DC converter according to any of Claims 1 to 7, wherein at least one alternating-current return path (13) is connected at its input side to the input lines (6 and 7) and at its output side to the output lines (8 and 9), wherein the capacitor (Cᵣ₂) in the alternating-current return path (13) is arranged between the input-side connections thereof to the input lines (6 and 7) and the output-side connections thereof to the two output lines (8 and 9).

9. DC-to-DC converter according to Claim 7, wherein an alternating-current return path (13) is assigned to each resonant circuit (12), which alternating-current return path (13) is connected with its input side and its output side to the same lines (6, 7, 8, 9) to which the associated resonant circuit (12) is connected.

10. DC-to-DC converter according to any of Claims 1 to 9, wherein an alternating-current return path (13) is provided, which is connected at its input side to the input lines (6 and 7) via two capacitors and at its output side to the output lines (8 and 9) via two further capacitors.

11. DC-to-DC converter according to any of Claims 1 to 9, wherein a plurality of alternating-current return paths (13) are connected together at their output side via two capacitors to the output lines (8 and 9).

12. DC-to-DC converter according to Claim 7, wherein the alternating-current return path (13) is connected via switching connections at its input side to the two input lines (6 and 7) and at its output side to the two output lines (8 and 9), wherein the switching connections comprise, on at least one side, in each case driven switches, and wherein the alternating-current return path (13) is designed as further resonant circuit (14) and, in addition to the capacitor (Cᵣ₂), comprises a resonant inductor (Lᵣ₂).

13. DC-to-DC converter according to Claim 7 or any of the preceding claims which refer back to Claim 7, wherein each resonant circuit (12) and the alternating-current return path (13) assigned thereto are connectable at least to one side of the DC-to-DC converter (5) via a driven connecting switch.

14. DC-to-DC converter according to Claim 7 or any of the preceding claims which refer back to Claim 7, **characterized in that** each resonant circuit (12) and the alternating-current return path (13) assigned thereto are electrically conductively connected to one another at their output side by a coupling connection which is selected from a capacitor and an inductor.

15. DC-to-DC converter according to Claim 11, **characterized in that** each resonant circuit (12) and the alternating-current return path (13) assigned thereto are connected at the input side in each case via two driven switches (S₁ and S₂, S₃ and S₄) to in each case one of the two input lines (6 and 7), wherein another driven switch is arranged in an input-side line which is selected from the input lines (6 or 7) and intermediate potential input lines which conduct intermediate potentials lying between the input lines.

## Revendications

1. Convertisseur continu-continu (5) pour convertir une tension continue d'entrée (U_{E}) appliquée entre deux lignes d'entrée (6 et 7) d'un côté d'entrée du convertisseur continu-continu (5) en une tension continue de sortie (U_{Z}) appliquée entre deux lignes de sortie (8 et 9) d'un côté de sortie du convertisseur continu-continu (5), dans lequel le convertisseur continu-continu (5) comprenant:
- au moins un trajet aller de courant alternatif (16), lequel est connecté, via des composants électriques, du côté d'entrée, aux lignes d'entrée (6 et 7) et du côté de sortie, aux lignes de sortie (8 et 9), dans lequel les composants électriques sont des composants électriques à commutation entre le trajet aller de courant alternatif (16) et au moins l'une des lignes d'entrée (6 et 7) et au moins l'une des lignes de sortie (8 et 9), l'un au moins d'entre eux étant commandé ; et
- au moins un trajet de retour de courant alternatif (13) pour un retour d'un courant s'écoulant via le trajet aller de courant alternatif (16), lequel est relié, via des connexions, du côté d'entrée, à au moins l'une des lignes d'entrée (6 et 7) et du côté de sortie, à au moins l'une des lignes de sortie (8 et 9), dans lequel les connexions du côté d'entrée et du côté de sortie sont des connexions durablement électroconductrices ou des connexions à commutation électrique ;
- dans lequel les lignes d'entrée (6 et 7) sont isolées de manière galvanique des lignes de sortie (8 et 9), par des condensateurs (Cᵣ₁, Cᵣ₂), dans tous les trajets de courant alternatif (16, 13),
**caractérisé par**
- un convertisseur auxiliaire (17) pour compenser une somme de courants sur tous les trajets aller de courant alternatif (16) et trajets de retour de courant alternatif (13), lequel ne transmet pas plus de 10% du courant s'écoulant actuellement via tous les trajets aller de courant alternatif (16) et lequel relie de manière électroconductrice un trajet de courant de compensation (18) supplémentaire, lequel est connecté en parallèle aux tous les trajets aller de courant alternatif (16) et trajets de retour de courant alternatif (13), au niveau de l'une de ses extrémités, via deux commutateurs (S₇, S₈ respectivement S₉, S₁₀) commandés, alternativement à deux lignes sur le même côté du convertisseur continu-continu (5), lesquelles sont choisies dans le groupe de lignes comprenant :
- les lignes d'entrée (6, 7),
- des lignes d'entrée de potentiel intermédiaire, véhiculant des potentiels intermédiaires, situées entre les potentiels des lignes d'entrée,
- les lignes de sortie (8 et 9) et
- des lignes de sortie de potentiel intermédiaire, véhiculant des potentiels intermédiaires, situées entre les potentiels des lignes de sortie,
dans lequel le trajet de courant de compensation (18) est relié durablement de manière électroconductrice au niveau de son autre extrémité, via au moins un condensateur de liaison (Cₑ), à au moins une ligne située sur le côté en vis-à-vis du même côté du convertisseur continu-continu (5), laquelle est choisie dans le groupe de lignes.

2. Convertisseur continu-continu selon la revendication 1, dans lequel, dans le trajet de courant de compensation (18), une inductance (Le) est connectée en série avec le condensateur de liaison (Cₑ).

3. Convertisseur continu-continu selon la revendication 1 ou 2, dans lequel le trajet de courant de compensation (18) est relié de manière électroconductrice au niveau d'un point entre le condensateur de liaison (Cₑ) et les commutateurs commandés (S₇, S_{8;} S₉, S₁₀), via un condensateur de couplage (C_{K}), à l'une des deux lignes auxquelles le convertisseur auxiliaire (17) relie alternativement le trajet de courant de compensation (18) via les commutateurs commandés (S₇, S₈; S₉, S₁₀).

4. Convertisseur continu-continu selon les revendications 2 et 3, dans lequel le point se situe entre le condensateur de liaison (Cₑ) et l'inductance (Lₑ).

5. Convertisseur continu-continu selon l'une des revendications 1 à 4, dans lequel une commande (20) du convertisseur auxiliaire (17) collecte une somme de courants sur tous les trajets aller de courant alternatif (16) et trajets retour de courant alternatif (13) ainsi que le trajet de courant de compensation (18), et la règle vers zéro.

6. Convertisseur continu-continu selon la revendication 5, dans lequel la commande (20) assure la commande des commutateurs commandés (S₇, S₈; S₉, S₁₀) du convertisseur auxiliaire (17) avec une modulation des impulsions en largeur (PWM).

7. Convertisseur continu-continu selon l'une des revendications 1 à 6, dans lequel le convertisseur continu-continu (5) comprend au moins un circuit résonant (12), présentant une inductance à résonance (Lᵣ₁) et un condensateur à résonance (Cᵣ₁), reprèsentant d'un trajet aller de courant alternatif (16), lequel est connecté du côté d'entrée, via au moins deux commutateurs commandés (S₁ et S₂), respectivement à l'une des deux lignes d'entrée (6 et 7).

8. Convertisseur continu-continu selon l'une des revendications 1 à 7, dans lequel au moins un trajet de retour de courant alternatif (13) est relié, du côté d'entrée, aux lignes d'entrée (6 et 7) et du côté de sortie, aux lignes de sortie (8 et 9), dans lequel le condensateur (Cᵣ₂) est disposé dans le trajet de retour de courant alternatif (13) entre ses connexions du côté d'entrée aux lignes d'entrée (6 et 7) et ses connexions du côté de sortie aux deux lignes de sortie (8 et 9).

9. Convertisseur continu-continu selon la revendication 7, dans lequel on associe à chaque circuit résonant (12) un trajet de retour de courant alternatif (13), lequel est relié du côté d'entrée et du côté de sortie aux mêmes lignes (6, 7, 8, 9) que celles auxquelles le circuit résonant (12) associé est connecté.

10. Convertisseur continu-continu selon l'une des revendications 1 à 9, dans lequel on prévoit un trajet de retour de courant alternatif (13), lequel est relié, du côté d'entrée, aux lignes d'entrée (6 et 7) via deux condensateurs et du côté de sortie, aux lignes de sortie (8 et 9) via deux autres condensateurs.

11. Convertisseur continu-continu selon l'une des revendications 1 à 9, dans lequel plusieurs trajets de retour de courant alternatif (13) sont reliés en commun, du côté de sortie, via deux condensateurs, aux lignes de sortie (8 et 9).

12. Convertisseur continu-continu selon la revendication 7, dans lequel le trajet de retour de courant alternatif (13) est relié, via des connexions à commutation, du côté d'entrée, aux deux lignes d'entrée (6 et 7) et du côté de sortie, aux deux lignes de sortie (8 et 9), dans lequel les connexions à commutation comprennent, sur au moins un côté, des commutateurs commandés respectifs et dans lequel le trajet de retour de courant alternatif (13) est réalisé en tant qu'un autre circuit résonant (14) et présente, en plus du condensateur (Cᵣ₂), une inductance à résonance (Lᵣ₂).

13. Convertisseur continu-continu selon la revendication 7 ou l'une des revendications précédentes faisant référence à la revendication 7, dans lequel chaque circuit résonant (12) et le trajet de retour de courant alternatif (13) qui lui est associé peuvent être reliés, au moins sur un côté du convertisseur continu-continu (5), via un commutateur de liaison commandé.

14. Convertisseur continu-continu selon la revendication 7 ou l'une des revendications précédentes faisant référence à la revendication 7, **caractérisé en ce que** chaque circuit résonant (12) et le trajet de retour de courant alternatif (13) qui lui est associé sont reliés ensemble de manière électroconductrice, du côté de sortie, grâce à une connexion par couplage qui est choisie à partir d'un condensateur et d'une inductance.

15. Convertisseur continu-continu selon la revendication 11, **caractérisé en ce que** chaque circuit résonant (12) et le trajet de retour de courant alternatif (13) qui lui est associé sont connectés du côté d'entrée, via respectivement deux commutateurs commandés (S₁ et S₂, S₃ et S₄), respectivement à l'une des deux lignes d'entrée (6 et 7), dans lequel, dans une ligne du côté d'entrée, laquelle est choisie à partir des lignes d'entrée (6 ou 7) et des lignes d'entrée de potentiel intermédiaire véhiculant des potentiels intermédiaires situées entre les lignes d'entrée, un autre commutateur commandé est disposé.
